(19) Europäisches Patentamt
European Patent Office
Office européen des brevets

(11) EP 3 175 544 B1

(12) FASCICULE DE BREVET EUROPEEN

(45) Date de publication et mention
de la délivrance du brevet:
**07.09.2022 Bulletin 2022/36**

(21) Numéro de dépôt: **15742383.1**

(22) Date de dépôt: **07.07.2015**

(51) Classification Internationale des Brevets (IPC):
***H02P 21/00*** (2016.01)

(52) Classification Coopérative des Brevets (CPC):
**H02P 21/0089**

(86) Numéro de dépôt international:
**PCT/FR2015/051874**

(87) Numéro de publication internationale:
**WO 2016/016534 (04.02.2016 Gazette 2016/05)**

(54) **PROCÉDÉ ET DISPOSITIF DE COMMANDE DU COUPLE ÉLECTROMAGNÉTIQUE D'UN GROUPE MOTOPROPULSEUR**

VERFAHREN UND VORRICHTUNG ZUR STEUERUNG DES ELEKTROMAGNETISCHEN DREHMOMENTS EINES ANTRIEBSSTRANGES

METHOD AND DEVICE FOR CONTROLLING THE ELECTROMAGNETIC TORQUE OF A POWER TRAIN

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.07.2014 FR 1457423**

(43) Date de publication de la demande:
**07.06.2017 Bulletin 2017/23**

(73) Titulaire: **Renault s.a.s**
**92100 Boulogne Billancourt (FR)**

(72) Inventeur: **MERIENNE, Ludovic**
**91190 Gif sur Yvette (FR)**

(74) Mandataire: **Renault Group**
**Renault s.a.s.**
**API : TCR GRA 2 36**
**1, Avenue du Golf**
**78084 Guyancourt Cedex (FR)**

(56) Documents cités:
**EP-A2- 0 638 457      FR-A1- 2 980 059**
**FR-A1- 2 991 525      US-A- 3 851 234**
**US-A- 5 015 937       US-A1- 2011 241 583**
**US-A1- 2011 241 584   US-A1- 2013 069 568**
**US-B1- 6 181 091**

**Description**

L'invention concerne la commande des moteurs électriques, et en particulier la commande du couple électromagnétique des moteurs électriques synchrones triphasés à aimants permanents.

Un moteur électrique de type synchrone comprend une partie fixe appelée stator et une partie mobile appelée rotor. Le stator comprend trois bobines décalées de 120° et alimentées en courant alternatif. Le rotor comprend une bobine alimentée en courant continu ou un aimant permanent selon le type de rotor.

Dans un véhicule automobile à traction électrique, le couple fourni par un moteur électrique doit être contrôlé. Le couple d'une machine électrique étant directement lié aux courants circulant dans celle-ci, ces courants doivent être commandés de façon précise.

Les courants des phases du stator dépendent des résistances et inductances du rotor et du stator ainsi que de l'inductance mutuelle entre le rotor et le stator.

Dans une machine synchrone, notamment une machine synchrone triphasée à aimants permanents et à flux axial, les courants dans les trois phases du stator sont sinusoïdaux et déphasés chacun de $\dfrac{2\pi}{3} rad$ . Ces courants créent un champ magnétique tournant dans la machine électrique. Le rotor est composé d'aimants permanents, par exemple entre 1 et 5 paires de pôles. Comme une boussole, le rotor s'aligne naturellement sur le champ magnétique tournant créé par le stator. Ainsi, la fréquence de rotation du rotor est égale à la fréquence des courants du stator (synchrone). Ce sont les amplitudes des courants du stator et la puissance des aimants du rotor qui créent le couple nécessaire à la rotation de la machine. Pour commander ces courants, il faut donc appliquer à chaque phase du stator des tensions sinusoïdales déphasées de $\dfrac{2\pi}{3} rad$ chacune également.

Généralement, il est plus simple d'appliquer une régulation sur des valeurs presque constantes que sur des signaux sinusoïdaux. La transformée de Park est généralement utilisée pour projeter un système triphasé sur un espace bidimensionnel pour se retrouver dans un repère tournant équivalent. Il est ainsi possible de transposer les trois courants et les trois tensions sinusoïdales du stator relatives aux trois phases d'un système triphasé dans un espace où les trois signaux sinusoïdaux de courant ou de tension s'expriment sous la forme de deux signaux presque constants de courant ou de tension (une composante sur l'axe direct $X_d$ et une composante sur l'axe en quadrature $X_q$). Pour cela, le repère de Park s'appuie sur un repère lié au champ tournant, soit dans le cas de la machine synchrone à un repère lié au rotor.

En travaillant avec des courants et des tensions exprimées dans l'espace de Park, il est ainsi possible d'agir sur des courants ou des tensions variant lentement plutôt que sur des signaux sinusoïdaux pour réguler la machine triphasée à commander.

En faisant la transformée inverse, il est possible de se ramener au repère normal de la machine et donc de savoir exactement quelles tensions ou quels courants appliquer sur chaque phase de la machine.

La commande d'une machine synchrone à aimants permanents nécessite de prendre en compte des phénomènes de saturation des commandes, dus notamment aux limites en tension de la batterie.

En effet, l'utilisation d'une batterie comme alimentation de la machine électrique triphasée impose des contraintes supplémentaires en ce que les tensions applicables sont limitées par les capacités de la batterie. Il n'est en effet pas possible d'atteindre certaines consignes à cause de ces limitations. Une consigne en dehors de l'espace atteignable est souvent génératrice d'instabilité.

L'objectif est d'assurer la stabilité des courants dans la machine lors de sa régulation malgré les limitations en tension. Si, avec ces contraintes, les consignes sont inatteignables alors l'objectif est de se rapprocher au maximum de la consigne dans la mesure du possible.

Le document US 3 851 234 décrit une méthode pour éviter la saturation magnétique en réduisant la vitesse du moteur fournissant le couple.

Le document US 5 015 937 décrit un procédé de commande d'une machine synchrone à rotor bobiné en boucle ouverte avec des tables de données pour éviter la saturation.

Le document US 6 181 091 décrit un procédé de commande d'une machine synchrone à aimants permanents dans laquelle la saturation est évitée en modifiant le fonctionnement du module de modulation de largeur de phase assurant les tensions sur chaque branche du moteur.

Mais il n'est pas prévu dans ces documents une saturation permettant de conserver un découplage dynamique des commandes.

De plus, dans les procédés de commande connus, le couple électromagnétique accessible par la machine synchrone est réduit afin d'éviter la saturation en tension, notamment en commandant directement une composante de courant dans l'espace de Park.

En effet, usuellement, pour permettre de garder le contrôle des composantes directe et quadratique de courant, sont calculées des cartographies des composantes du courant en fonction du couple demandé, de la vitesse et de la tension batterie. Cette méthode présente le désavantage de devoir faire une campagne de mise au point des cartographies des courants.

De plus, rien ne permet d'assurer l'obtention de courants optimaux pour un couple électromagnétique donné. En effet, avec cette méthode de cartographie, pour s'assurer de ne pas entrer dans des conditions de saturation de tension, une marge de sécurité est prévue sur la valeur de la composante directe de courant, c'est-à-dire que la composante directe de courant est diminuée plus que nécessaire afin de ne pas risquer de voir des saturations en commande du système au détriment du rendement de la machine.

Une telle réduction de la composante directe du courant implique une réduction des tensions et donc une diminution du couple électromagnétique accessible.

De plus, ces cartographies sont définies pour certains points de fonctionnement. Afin d'économiser du temps, les essais sont réalisés à trois niveaux de tension par exemple et les points de fonctionnement pour les tensions intermédiaires sont interpolés ce qui renforce le caractère non optimal de cette méthode. Pourtant le défluxage est une contrainte pour réaliser le couple. Pour être dans des conditions optimales, il faudrait utiliser au maximum la tension disponible et donc saturer les commandes.

Il est connu du document FR 2 980 059 un procédé de commande hors saturation d'un groupe motopropulseur à rotor bobiné d'un véhicule permettant un découplage total entre les consignes de courant du rotor et les consignes de courant du stator grâce à une saturation des signaux de commande dans l'espace découplé.

Cependant, un tel procédé ne permet que de réguler la machine synchrone dans un régime à basse vitesse hors saturation en limitant le domaine de courant atteignable en cas de saturation.

Il est connu du document FR 2 991 525 une commande en saturation de tension utilisant au maximum la tension batterie disponible et régulant la composante quadratique du courant en assurant que la composante directe du courant soit la plus haute possible. Pour cela notamment, lorsque la composante directe du courant est négative, il est fait recours à une commande en défluxage utilisant un paramètre polaire de commande maintenant la composante directe de courant le plus proche de zéro possible.

Cependant, un tel procédé ne peut être utilisé que lors de la saturation des régimes de vitesse.

Le document EP0638457 décrit un procédé de commande du couple d'une machine à aimants permanents comprenant un calcul de consignes directe et quadratique de courant de sorte à ce que le flux généré par la composante directe de courant empêche la f.e.m de la machine de dépasser la tension batterie, et de sorte à ce que la composante quadratique de courant permette de réaliser le couple de consigne.

Le document US2013069568 décrit un procédé de commande du couple d'une machine à aimants permanents se basant sur l'angle entre les composantes directe et quadratique des tensions de la machine pour maximiser le facteur de puissance ou la puissance fournie.

Un but de la présente invention est d'améliorer la qualité de régulation d'un moteur électrique synchrone à aimants permanents en permettant de combiner une commande en saturation avec une régulation compensant la variation de couple due à la saillance de la machine lors de fort défluxage.

Un autre but de l'invention est de rendre la commande de la machine compatible avec la commande hors saturation à basse vitesse, sans nécessité de cartographie des composantes directe et quadratique du courant en fonction du couple.

L'invention permet ainsi de réaliser une adaptation en fonction de la vitesse et de la tension de la batterie directement par la régulation.

Selon un aspect de l'invention, il est proposé dans un mode de mise en œuvre, un procédé de commande d'un couple électromagnétique d'une machine synchrone à aimants permanents d'un groupe motopropulseur équipant un véhicule automobile.

Selon une caractéristique générale de l'invention, le procédé comprend :

- une mesure du courant délivré sur les trois phases de la machine,
- une transposition des trois courants mesurés en une composante directe et une composante quadratique de courant à partir d'une transformée des systèmes triphasés,
- la réception d'une consigne pour la composante quadratique ($I_q$) de courant et d'une consigne pour la composante directe $I_d$ de courant,
- un calcul des composantes directe et quadratique de la tension de commande non saturée à partir des composantes directe et quadratique de courant et des consignes directe et quadratique de courant,
- un calcul des composantes directe et quadratique de la tension de commande saturée à partir de la composante quadratique de courant et de la consigne quadratique de courant,
- une commande des tensions de sortie d'un onduleur couplé en entrée de la machine synchrone à partir des commandes non saturées si la composante directe du courant est positive, ou à partir des commandes saturées si la composante directe du courant est négative.

Le procédé de commande permet de commander une machine synchrone à pôles lisses sur toute la plage de vitesse, aussi bien à basse vitesse qu'à haute vitesse. La régulation est opérée en cherchant à réguler la composante directe du courant à zéro, le couple n'étant lié, pour les machines à pôles lisses, qu'à la composante quadratique du courant. Ainsi lors du passage en tension de commande saturée, le fait de ne plus réaliser la composante directe du courant n'est pas problématique car le couple électromagnétique est conservé. La commande reste ainsi optimale.

La transformée des systèmes triphasés peut être une transformée de Park. Elle peut également être une transformée de Fortescue, une transformée de Clarke, ou une transformée de Ku.

Dans l'espace de Park, le système à commander comprend une composante directe et une composante quadratique de tensions appliquées sur les deux axes du plan de Park (axe direct et axe en quadrature) de la machine synchrone, les deux composantes de tension s'exprimant en fonction de la composante directe et de la composante quadratique du courant de la machine synchrone ; les deux composantes de courant s'appliquant sur les deux axes du plan de Park. Lorsque le rotor de la machine synchrone fonctionne à haute vitesse, la composante directe de courant possède une valeur négative et engendre des pertes si elle n'est pas compensée.

La commande en défluxage, c'est-à-dire la commande saturée, permet de compenser le terme dû au flux magnétique des aimants permanents qui est proportionnel à la vitesse de rotation du rotor, le flux des aimants étant constant. Le terme dû au flux magnétique, nommé également force électromagnétique de la machine, devient trop important pour être complètement compensé. La commande en tension de la machine synchrone à haute vitesse permet de compenser toujours au mieux le terme dû au flux magnétique.

De préférence, le procédé comprend en outre, avant les calculs des tensions de commande saturée et non saturée, une correction de la consigne de la composante quadratique de courant en fonction des valeurs des composantes directe et quadratique du courant circulant dans la machine et des valeurs des composantes directe et quadratique de l'inductance de la machine synchrone.

Il est ainsi possible d'adapter le procédé de commande au cas d'une machine à pôles saillants.

Les valeurs des composantes directe et quadratique de l'inductance de la machine synchrone sont déterminées hors ligne sur banc test. Elles peuvent être fixées à une valeur constante donnée ou bien entrées dans une cartographie définissant la valeur des deux composantes en fonction de la valeur des composantes directe et quadratique du courant. Dans ce dernier cas, le procédé peut ainsi comprendre avant la correction, une détermination des valeurs des composantes directe et quadratique de l'inductance de la machine synchrone à partir de la cartographie dédiée et des valeurs des composantes directe et quadratique du courant mesuré.

La correction comprend la réalisation préalable d'une cartographie de la composante quadratique de courant réalisant seul le couple désiré, la consigne de la composante quadratique de courant étant corrigée à l'aide de l'équation :

$$I_{qreq} = I_{qseul} - \frac{I_d I_q \left( L_d - L_q \right)}{\Phi_f} \qquad (1)$$

avec $\Phi_f$ le flux généré par les aimants du rotor exprimé en Weber (Wb),

$I_{qseul}$ la composante quadratique du courant statorique réalisant seul le couple désiré dans le plan de Park,

$I_d$ la composante directe du courant statorique dans le plan de Park calculée à partir des courants statoriques mesurés,

$I_q$ la composante quadratique du courant statorique dans le plan de Park calculée à partir des courants statoriques mesurés,

$L_d$ la composante directe de l'inductance statorique dans le plan de Park,

et $L_q$ la composante quadratique de l'inductance statorique dans le plan de Park.

Quel que soit le régulateur utilisé, la consigne de la composante directe de courant sera issue d'une cartographie de la composante directe de courant optimale pour la réalisation du couple électromagnétique sur toute la plage souhaitée.

Il n'est ainsi pas nécessaire d'avoir un grand nombre de cartographies. Seulement deux. En effet, ce sont bien les mêmes données qui servent sur toute la plage de fonctionnement. Il y a donc cohérence des consignes quel que soit le régulateur actif.

Par ailleurs, que ce soit à basse vitesse où la répartition optimale des courants est assurée ou à haute vitesse où le défluxage minimal est assuré, les deux commandes sont optimisées pour assurer les meilleures performances avec la machine synchrone.

Plus particulièrement, à basse vitesse, l'optimalité est assurée tant que le régulateur arrive à réaliser les consignes, et à haute vitesse, le caractère optimal est assuré par le régulateur, la partie génération de consigne assurant la réalisation du couple.

Le terme correspondant à la différence entre la composante directe et la composante quadratique de l'inductance de la machine représente la saillance de la machine. Ce terme est généralement positif dans les machines ayant une bonne proportion d'aimants permanents. Il représente la capacité de la partie métallique du rotor à s'aligner avec le champ magnétique créé par le stator.

Selon un autre aspect de l'invention, il est proposé dans un mode de réalisation, un système de commande du couple électromagnétique d'une machine à réluctance commutée variable, comprenant :

- des moyens de mesure du courant délivré sur les trois phases de la machine,
- des moyens de transposition aptes à transposer les trois courants mesurés en une composante directe et une composante quadratique de courant à partir d'une transformée des systèmes triphasés,
- des moyens de réception d'une consigne pour la composante quadratique de courant et d'une consigne pour la composante directe $I_d$ de courant,
- des premiers moyens de calcul aptes à calculer des composantes directe et quadratique de la tension de commande non saturée à partir des composantes directe et quadratique de courant et des consignes directe et quadratique de courant,
- des seconds moyens de calcul aptes à calculer des composantes directe et quadratique de la tension de commande saturée à partir de la composante quadratique de courant et de la consigne quadratique de courant,
- des moyens de commande aptes à commander l'application des tensions de sortie d'un onduleur couplé en entrée de la machine synchrone à partir des commandes non saturées si la composante directe du courant est positive, ou à partir de commandes saturées si la composante directe du courant est négative.

De préférence, le système comprend en outre un module de correction apte à corriger la consigne de la composante quadratique de courant en fonction des valeurs des composantes directe et quadratique du courant circulant dans la machine et des valeurs des composantes directe et quadratique de l'inductance de la machine.

Avantageusement, le système comprend en outre une unité de traitement couplée en entrée du module de correction et comportant une cartographie de la composante directe de courant optimale pour la réalisation du couple électromagnétique sur toute la plage souhaitée et une cartographie de la composante quadratique de courant réalisant seul le couple désiré.

Selon un autre aspect, il est proposé un système informatique comprenant des moyens configurés pour mettre en œuvre le procédé tel que défini ci-dessus.

Selon un autre aspect, il est proposé un véhicule automobile comprenant un système informatique tel que défini ci-dessus.

Selon encore un autre aspect, il est proposé un produit programme d'ordinateur selon la revendication 5

Selon encore un autre aspect, il est proposé un support lisible par un système informatique selon la revendication 6

D'autres avantages et caractéristiques de l'invention apparaîtront à l'examen de la description détaillée d'un mode de mise en œuvre, nullement limitatif, et des dessins annexés, sur lesquels :

- la figure 1 présente un organigramme d'un procédé de commande du couple électromagnétique d'une machine synchrone selon un mode de mise en œuvre:
- la figure 2 illustre, de manière schématique, un système de commande du couple électromagnétique d'une machine synchrone selon un mode de réalisation de l'invention.

Pour assurer la régulation d'un groupe motopropulseur comprenant un moteur synchrone comprenant un stator et un rotor et équipant un véhicule, on utilise un onduleur permettant de commander la tension des phases du stator. L'onduleur est alimenté par une batterie équipant le véhicule.

On utilise également un repère de Park qui permet d'exprimer les grandeurs électriques dans un repère tournant par exemple lié au rotor dans le cas d'un moteur synchrone. Ce repère comprend deux axes tournant, l'axe direct d et l'axe quadratique q.

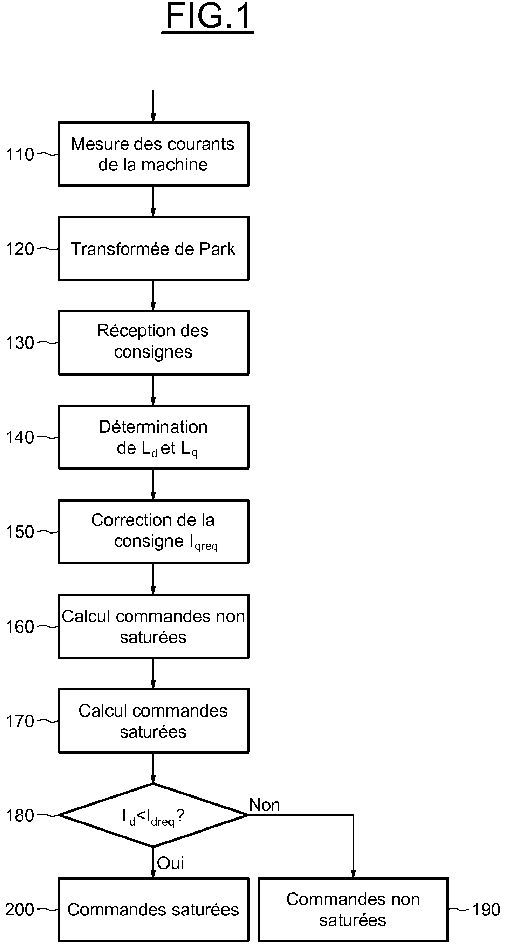

Sur la figure 1, est représenté un organigramme, selon un mode de mise en œuvre de l'invention, d'un procédé de commande du couple électromagnétique d'une machine synchrone lorsque les tensions à ses bornes saturent.

Dans une première étape 110, on mesure le courant $I_1$ à $I_3$ pour chacune des trois phases de la machine synchrone triphasée à aimants permanents.

Dans une seconde étape 120, on applique la transformée de Park aux trois courants mesurés de manière à obtenir une composante directe $I_d$ et une composante quadratique $I_q$ de courant.

Dans l'espace de Park, le système d'équation à commander pour la machine synchrone est le suivant :

$$\begin{cases} V_d = R_s I_d + L_d \dot{I}_d - \omega_r L_q I_q \\ V_q = R_s I_q + L_q \dot{I}_q - \omega_r \left( L_d I_d + \phi_f \right) \end{cases} \qquad (2)$$

Avec $V_d$ et $V_q$ les tensions appliquées sur les deux axes respectivement direct et en quadrature du plan de Park de la machine, $I_d$ et $I_q$ les courants circulant dans la machine sur les deux axes respectivement direct et en quadrature du plan de Park, $R_s$ la résistance équivalente du stator de la machine, $L_d$ et $L_q$ les inductances statoriques sur chaque axe respectivement direct et en quadrature du plan de Park de la machine, $\omega_r$ la vitesse de rotation du champ magnétique de la machine (soit la vitesse de rotation du rotor multipliée par le nombre de paires de pôles de la machine), et $\phi_f$ le flux généré par les aimants du rotor.

Les tensions $V_d$ et $V_q$ sont créées par un onduleur alimenté par une batterie. Les contraintes à respecter par conséquent sont :

$$\sqrt{V_d^{\,2} + V_q^{\,2}} \leq \frac{V_{bat}}{\sqrt{3}} \qquad (3)$$

Avec Vbat la tension de la batterie qui alimente l'onduleur.

L'objectif est de générer un couple électromagnétique avec le meilleur rendement possible pour la machine synchrone sur une plage de vitesse connue.

Le couple électromagnétique généré par la machine synchrone peut se calculer à partir de l'expression suivante :

$$C_{em} = p\left( \phi_d I_q - \phi_q I_d \right) \qquad (4)$$

Avec $C_{em}$ le couple électromagnétique généré par la machine, p le nombre de paires de pôles du rotor de la machine, et $\phi_d$ et $\phi_q$ les composantes du flux généré sur les axes respectivement direct et en quadrature de la machine qui s'expriment sous la forme :

$$\phi_d = L_d I_d + \phi_f \quad \text{et} \quad \phi_q = L_q I_q \qquad (5)$$

En combinant les équations 4 et 5, il est possible d'écrire la relation suivante entre le couple électromagnétique et les courants :

$$C_{em} = p\left[ \phi_f I_q + I_d I_q \left( L_d - L_q \right) \right] \qquad (6)$$

Le terme correspondant à la différence entre la composante directe et la composante quadratique de l'inductance de la machine représente la saillance de la machine. Ce terme est généralement positif dans les machines ayant une bonne proportion d'aimants permanents. Il représente la capacité de la partie métallique du rotor à s'aligner avec le champ magnétique créé par le stator.

Ainsi dans cette machine, il existe pour chaque valeur de couple, une répartition optimale des composantes directe et quadratique de courant $I_d$ et $I_q$ qui offre le meilleur rendement.

Par exemple, pour minimiser les pertes joules, il faut minimiser le terme $I_d^{\,2} + I_q^{\,2}$ tout en réalisant le couple désiré d'après l'équation 6. Logiquement, pour cette répartition optimale, les valeurs des composantes directe et quadratique de courant $I_d$ et $I_q$ seront positives si la valeur de la composante directe $L_d$ de l'inductance est supérieure à la valeur de la composante quadratique $L_q$ de l'inductance, $L_d > L_q$, afin d'avoir un couple positif lié à l'aimant permanent et un couple de saillance positif. Si au contraire la valeur de la composante directe $L_d$ de l'inductance est inférieure à la valeur de la composante quadratique $L_q$ de l'inductance, $L_d < L_q$, pour cette répartition optimale, la valeur de la composante directe $I_d$ devra être négative et la valeur de la composante quadratique de courant $I_q$ positive afin d'avoir un couple positif lié à l'aimant permanent et un couple de saillance positif.

Malheureusement, assurer une composante directe de courant $I_d$ quelconque n'est pas possible sur l'ensemble de la plage de fonctionnement. Par exemple, d'après l'équation (2), lorsque $\omega_r \Phi_f > V_q^{max}$, il devient impossible d'avoir $I_d = I_q = 0$. Le terme $\omega_r \Phi_f$ est appelé la force électromotrice (FEM) de la machine. On voit dans l'équation (1) qu'il faut compenser cette FEM pour maintenir la composante directe de courant $I_d$ positive ou nulle sinon c'est cette composante directe de courant qui, en diminuant, la compensera.

Dans le mode de mise en œuvre du procédé illustré sur la figure 1, on reçoit, dans une étape 130, une consigne intermédiaire $I_{qseul}$ pour la composante quadratique $I_q$ de courant et une consigne intermédiaire $I_{dopt}$ pour la composante directe $I_d$ de courant. Ces consignes intermédiaires $I_{qseul}$ et $I_{dopt}$ sont déduites de la consigne de couple $C_{em}^{req}$ demandée par le conducteur. Les consignes intermédiaires $I_{qseul}$ et $I_{dopt}$ sont déduites à l'aide de cartographies réalisées sur banc test définissant une valeur de composante de courant pour un couple électromagnétique.

La composante directe $I_d$ de courant optimale $I_{dopt}$ correspond, pour un couple souhaité, à la composante de courant directe $I_d$ permettant de réaliser le couple électromagnétique avec la composante de courant quadratique optimale $I_{qopt}$ sans tenir compte de la saturation en tension, c'est-à-dire sans tenir compte de la vitesse ou de la tension aux bornes de la batterie.

La cartographie de la consigne intermédiaire $I_{qseul}$ est réalisée en déterminant les valeurs de la composante quadratique de courant $I_q$ réalisant seul, c'est-à-dire pour une composante directe $I_d$ de courant nulle, la consigne de couple $C_{em}^{req}$. Dans une étape suivante 140, on détermine, dans ce mode de mise œuvre, la composante directe $L_d$ et de la composante quadratique $L_q$ de l'inductance de la machine synchrone à partir de la valeur des composantes directe et quadratique du courant $I_d$ et $I_q$ et de cartographies réalisées précédemment hors ligne. Puis on corrige, dans une étape 150, la consigne $I_{qreq}$ de la composante quadratique de courant reçue dans l'étape précédente 130 en fonction des valeurs des composantes directe et quadratique $I_d$ et $I_q$ du courant circulant dans la machine déterminée à l'étape 120.

La correction est réalisée à partir de la cartographie de la composante quadratique de courant $I_q$ réalisant seul le couple correspondant à la consigne de couple $C_{em}^{req}$.

La cartographie de la composante directe de courant optimale $I_{dopt}$ sert à générer la consigne de la composante directe $I_{dreq}$. La consigne de la composante quadratique $I_{qreq}$ est générée à partir de la cartographie $I_{qseul}$ et du terme correctif selon l'équation (1) ci-dessous.

La consigne $I_{q\_req}$ de la composante quadratique de courant est corrigée à partir de l'équation 1 déjà mentionnée et réécrite ci-dessous :

$$I_{qreq} = I_{qseul} - \frac{I_d I_q (L_d - L_q)}{\Phi_f} \qquad (1)$$

avec $\Phi_f$ le flux généré par les aimants du rotor exprimé en Weber (Wb).

Dans une étape suivante 160, on calcule les valeurs des composantes directe et quadratique de la tension de commande non saturée $V_{d\_nonsat}$ et $V_{q\_nonsat}$ à partir des composantes directe et quadratique de courant $I_d$ et $I_q$ et des consignes directe et quadratique de courant $I_{dreq}$ et $I_{qreq}$.

Par construction on a pour un couple désiré:

$$C_{em}^{req} = p\left[\phi_f I_{qopt}^{cart} + I_{dopt}^{cart} I_{qopt}^{cart} (L_d - L_q)\right] \qquad (7)$$

Et :

$$C_{em}^{req} = p\left[\phi_f I_{qseul}^{cart}\right] \qquad (8)$$

A basse vitesse, il n'y a pas de saturation en tension, donc en régime établi les consignes de courant sont bien réalisées. On en déduit $I_d = I_{dopt}^{cart} = I_{dreq}$ et $I_q = I_{qreq}$ d'où d'après l'équation (1) :

$$I_{qreq} = \frac{I_{qseul}^{cart}}{1 + \dfrac{I_{dopt}^{cart}\left(L_d - L_q\right)}{\Phi_f}} \qquad (9)$$

Donc avec l'équation (8), en remplaçant $I_{qseul}^{cart}$ on obtient :

$$I_{qreq} = \frac{C_{em}^{req}}{p\Phi_f + pI_{dopt}^{cart}\left(L_d - L_q\right)} \qquad (10)$$

Et avec l'équation (7) pour $C_{em}^{req}$ :

$$I_{qreq} = \frac{p\left[\Phi_f I_{qopt}^{cart} + I_{dopt}^{cart} I_{qopt}^{cart}\left(L_d - L_q\right)\right]}{p\Phi_f + pI_{dopt}^{cart}\left(L_d - L_q\right)} = I_{qopt}^{cart} \qquad (11)$$

L'optimalité est ainsi bien assurée en suivant les cartographies optimales calculées hors ligne lors d'une phase de caractérisation de la machine.

Dans une étape 170, on calcule les valeurs des composantes directe et quadratique de la tension de commande saturée $V_{d\_sat}$ et $V_{q\_sat}$ à partir de la composante quadratique de courant $I_q$ et de la consigne quadratique de courant $I_{q\_req}$.

Dans le cas des hautes vitesses où la composante directe du courant $I_d$ n'est a priori pas connue, la même méthode de calcul de consigne assure la réalisation du couple demandé. Le caractère optimal de la commande est réalisé par le fait que la composante directe du courant $I_d$ est la plus élevée possible, tout en restant négative étant donné le régime à hautes vitesses, et donc minimise la perte en couple due à ce courant.

Quelle que soit la composante directe du courant $I_d$, on a d'après l'équation (6) :

$$I_{qreq} = \frac{I_{qseul}^{cart}}{1 + \dfrac{I_d\left(L_d - L_q\right)}{\Phi_f}} \qquad (12)$$

Ce qui fait que le couple produit est :

$$C = p\left[\phi_f + I_d\left(L_d - L_q\right)\right]\frac{I_{qseul}^{cart}}{1 + \dfrac{I_d\left(L_d - L_q\right)}{\Phi_f}} = p\phi_f I_{qseul}^{cart} = C_{em}^{req} \qquad (13)$$

Donc indépendamment du défluxage nécessaire, le couple de consigne continuera d'être réalisé.

L'objectif est de générer un couple électromagnétique avec le meilleur rendement possible pour la machine synchrone sur une plage de vitesse connue et allant des basses aux grandes vitesses. Or, à grande vitesse de rotation du moteur, les tensions de commande de la machine sont saturées et la composante directe $I_d$ du courant dans le plan de Park est négative.

Par conséquent, dans une étape 180, on compare la composante directe $I_d$ de courant à la consigne directe de courant $I_{dreq}$.

Si la composante directe du courant $I_d$ est supérieure ou égale à la consigne directe de courant $I_{dreq}$, on commande, dans une étape 190, les tensions de sortie $V_1$, $V_2$, $V_3$ d'un onduleur couplé en entrée de la machine synchrone à partir de la tension de commande non saturée calculée à l'étape 160. Si la composante directe du courant $I_d$ est inférieure à la consigne directe de courant $I_{dreq}$, on commande, dans une étape 200, les tensions de sortie $V_1$, $V_2$, $V_3$ d'un onduleur couplé en entrée de la machine synchrone à partir de la tension de commande saturée calculée à l'étape 170.

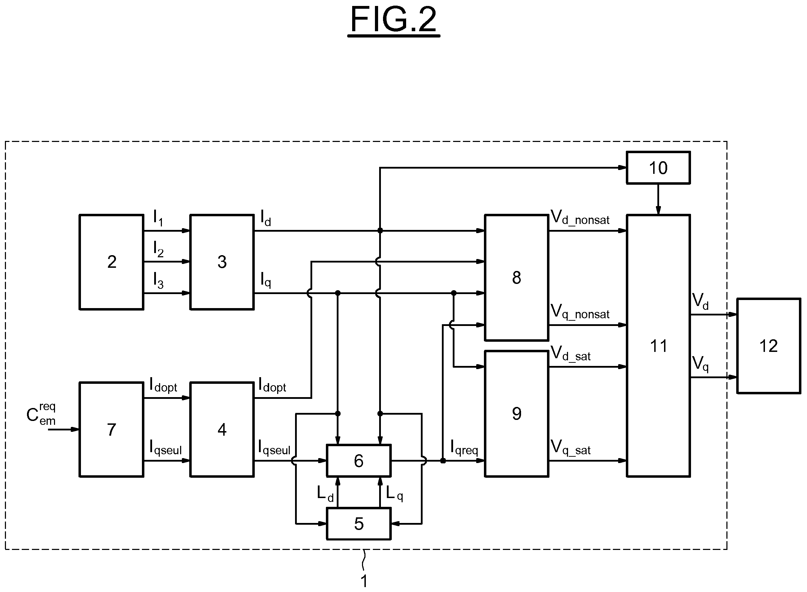

Sur la figure 2 est illustré un système de commande du couple électromagnétique d'une machine synchrone triphasée à aimants permanents selon un mode de réalisation de l'invention.

Le système de commande 1 du couple électromagnétique d'une machine synchrone triphasée à aimants permanents comprend des moyens de mesure 2 du courant délivré sur les trois phases $I_1, I_2, I_3$, de la machine. Ces moyens de mesure 2 sont couplés à des moyens de transposition 3 permettant de transposer les trois courants mesurés en une composante directe $I_d$ et une composante quadratique $I_q$ de courant à partir de la transformée de Park. Le système de commande comprend également des moyens de réception 4 d'une consigne $I_{qseul}$ pour la composante quadratique $I_q$ de courant et d'une consigne $I_{dopt}$ pour la composante directe $I_d$ de courant.

Le système de commande 1 comprend en outre des moyens de détermination 5 de la composante directe $L_d$ et de la composante quadratique $L_q$ de l'inductance de la machine synchrone à partir des valeurs des composantes directe et quadratique du courant mesuré $I_d$ et $I_q$ et de cartographies réalisées hors lignes. Le système de commande 1 comprend également un module de correction 6 recevant en entrée les valeurs des composantes directe et quadratique $L_d$ et $L_q$ de l'inductance déterminée par les moyens de détermination 5. Le module de correction 6 est configuré pour corriger la consigne $I_{q\_req}$ de la composante quadratique de courant en fonction des valeurs des composantes directe et quadratique $I_d$ et $I_q$ du courant circulant dans la machine.

Le module de correction 6 est couplé pour cela en entrée aux moyens de transposition 3 ainsi qu'à la sortie des moyens de réception 4 délivrant la consigne $I_{qreq}$ pour la composante indirecte $I_q$ de courant.

Les moyens de réception 4 sont couplés en entrée à une unité de traitement 7 configurée pour recevoir le couple électromagnétique requis par le conducteur $C_{em}^{req}$ en entrée et délivrer en sortie la consigne intermédiaire $I_{qseul}$ pour la composante quadratique $I_q$ de courant et la consigne intermédiaire $I_{dopt}$ pour la composante directe $I_d$ de courant à partir de deux cartographies réalisées préalablement. L'unité de traitement 7 comporte une cartographie de la composante directe $I_d$ de courant optimale $I_{dopt}$ pour la réalisation du couple électromagnétique sur toute la plage souhaitée et une cartographie de la composante quadratique de courant $I_q$ réalisant seul le couple désiré $I_{qseul}$.

Le système de commande 1 comprend en outre des premiers moyens de calcul 8 aptes à calculer des composantes directe et quadratique de la tension de commande non saturée $V_{d\_nonsat}$ et $V_{q\_nonsat}$ à partir des composantes directe et quadratique de courant $I_d$ et $I_q$ délivrées par les moyens de transposition 3, de la consigne directe de courant $I_{d\_req}$ délivrée par les moyens de réception 4 et de la consigne quadratique de courant $I_{q\_req}$ délivrée par le module de correction 6.

Le système de commande 1 comprend également des seconds moyens de calcul 9 aptes à calculer des composantes directe et quadratique de la tension de commande saturée $V_{d\_sat}$ et $V_{q\_sat}$ à partir de la composante quadratique de courant $I_q$ délivrée par les moyens de transposition 3 et de la consigne quadratique de courant $I_{q\_req}$ délivrée par le module de correction 6.

Le système de commande 1 comprend des moyens 10 de comparaison aptes à comparer la valeur de la composante directe de courant $I_d$ à la consigne directe de courant $I_{dreq}$. Si la composante directe du courant $I_d$ est supérieure ou égale à la consigne directe de courant $I_{dreq}$, le système se trouve hors saturation, sinon, il rentre en saturation. Les moyens de comparaison 10 sont couplés en entrée aux moyens de transposition 3 et en sortie à des moyens de commande 11 aptes à commander l'application des tensions de sortie $V_1, V_2, V_3$ d'un moyen de commande 12 de l'onduleur qui est couplé en entrée de la machine synchrone à partir des commandes non saturées si la composante directe du courant $I_d$ est positive, ou à partir de commandes saturées si la composante directe du courant $I_d$ est négative.

L'invention permet ainsi d'améliorer la qualité de régulation d'un moteur électrique synchrone à aimants permanents en permettant de combiner une commande en saturation avec une régulation compensant la variation de couple due à la saillance de la machine lors de fort défluxage.

L'invention permet en outre de rendre la commande de la machine compatible avec la commande hors saturation à basse vitesse, sans nécessité de cartographie des composantes directe et quadratique du courant en fonction du régime moteur et de la tension disponible.

L'invention permet ainsi de réaliser une adaptation en fonction de la vitesse de rotation de la machine et de la tension de la batterie directement par la régulation.

L'invention s'applique sur toute machine à aimant permanent notamment celles dont la saillance est caractérisée par un terme $(L_d\text{-}L_q)$ positif. Elle peut être appliquée sur des machines de traction comme sur des alterno-démarreurs.

## Revendications

**1.** Procédé de commande du couple électromagnétique d'une machine synchrone triphasée à aimants permanents d'un groupe motopropulseur équipant un véhicule automobile, comprenant :

- une mesure (110) du courant ($I_1$, $I_2$, $I_3$) délivré sur les trois phases de la machine,
- une transposition (120) des trois courants mesurés en une composante directe ($I_d$) et une composante quadratique ($I_q$) de courant à partir d'une transformée des systèmes triphasés,
- la réception (130) d'une consigne ($I_{q\_req}$) pour la composante quadratique ($I_q$) de courant et d'une consigne ($I_{d\_req}$) pour la composante directe ($I_d$) de courant issue d'une cartographie de la composante directe de courant optimale pour la réalisation du couple électromagnétique sur toute la plage souhaitée,
- un calcul (160) des composantes directe et quadratique de la tension de commande non saturée ($V_{d\_nonsat}$, $V_{q\_nonsat}$) à partir des composantes directe et quadratique de courant ($I_d$, $I_q$) et des consignes directe et quadratique de courant ($I_{d\_req}$, $I_{q\_req}$),
- un calcul (170) des composantes directe et quadratique de la tension de commande saturée ($V_{d\_sat}$, $V_{q\_sat}$) à partir de la composante quadratique de courant ($I_q$) et de la consigne quadratique de courant ($I_{q\_req}$),
- une commande (190, 200) des tensions de sortie ($V_1$, $V_2$, $V_3$) d'un onduleur couplé en entrée de la machine synchrone à partir des commandes non saturées si la composante directe du courant ($I_d$) est positive, ou à partir des commandes saturées si la composante directe du courant ($I_d$) est négative,

ledit procédé étant **caractérisé en ce qu'**il comporte en outre, avant les calculs des tensions de commande saturée et non saturée, une correction (150) de la consigne ($I_{q\_req}$) de la composante quadratique de courant en fonction des valeurs des composantes directe et quadratique ($I_d$, $I_q$) du courant circulant dans la machine et des valeurs des composantes directe (Ld) et quadratique (Lq) de l'inductance de la machine synchrone, dans lequel la correction (150) comprend la réalisation préalable d'une cartographie de la composante quadratique de courant ($I_q$) réalisant seul le couple désiré ($I_{qseul}$), la consigne de la composante quadratique de courant étant corrigée à l'aide de l'équation :

$$I_{qreq} = I_{qseul} - \frac{I_d I_q \left(L_d - L_q\right)}{\Phi_f}$$

avec $\Phi f$ le flux généré par les aimants du rotor exprimé en Weber (Wb),
$I_{qseul}$ la composante quadratique du courant statorique réalisant seul le couple désiré dans le plan de Park,
$I_d$ la composante directe du courant statorique dans le plan de Park calculée à partir des courants statoriques mesurés,
$I_q$ la composante quadratique du courant statorique dans le plan de Park calculée à partir des courants statoriques mesurés,
$L_d$ la composante directe de l'inductance statorique dans le plan de Park,
et $L_q$ la composante quadratique de l'inductance statorique dans le plan de Park.

2. Système de commande du couple électromagnétique d'une machine (1) à réluctance commutée variable, comprenant :

- des moyens de mesure (2) du courant ($I_1$, $I_2$, $I_3$) délivré sur les trois phases (i) de la machine (1),
- des moyens de transposition (3) aptes à transposer les trois courants mesurés en une composante directe ($I_d$) et une composante quadratique ($I_q$) de courant à partir d'une transformée des systèmes triphasés,
- des moyens de réception (4) d'une consigne ($I_{q\_req}$) pour la composante quadratique ($I_q$) de courant et d'une consigne ($I_{d\_req}$) pour la composante directe ($I_d$) de courant,
- des premiers moyens de calcul (8) aptes à calculer des composantes directe et quadratique de la tension de commande non saturée ($V_{d\_nonsat}$, $V_{q\_nonsat}$) à partir des composantes directe et quadratique de courant ($I_d$, $I_q$) et des consignes directe et quadratique de courant ($I_{d\_req}$, $I_{q\_req}$),
- des seconds moyens de calcul (9) aptes à calculer des composantes directe et quadratique de la tension de commande saturée ($V_{d\_sat}$, $V_{q\_sat}$) à partir de la composante quadratique de courant ($I_q$) et de la consigne quadratique de courant ($I_{q\_req}$),
- des moyens de commande (11) aptes à commander l'application des tensions de sortie ($V_1$, $V_2$, $V_3$) d'un onduleur (12) couplé en entrée de la machine synchrone à partir des commandes non saturées si la composante directe du courant ($I_d$) est positive, ou à partir de commandes saturées si la composante directe du courant ($I_d$) est négative,

ledit système étant **caractérisé en ce qu'**il comprend en outre, un module de correction (6) apte à corriger la consigne ($I_{q\_req}$) de la composante quadratique de courant en fonction des valeurs des composantes directe et quadratique ($I_d$, $I_q$) du courant circulant dans la machine et des valeurs des composantes directe (Ld) et quadratique (Lq) de l'inductance de la machine (1), et une unité de traitement (7) couplée en entrée du module de correction (6) et comportant une cartographie de la composante directe ($I_d$) de courant optimale ($I_{dopt}$) pour la réalisation du couple électromagnétique sur toute la plage souhaitée et une cartographie de la composante quadratique de courant ($I_q$) réalisant seul le couple désiré ($I_{qseul}$).

3. Système informatique comprenant des moyens configurés pour mettre en œuvre le procédé selon l'une des revendications 1 à 2.

4. Véhicule automobile comprenant un système informatique selon la revendication 3.

5. Produit programme d'ordinateur chargeable directement dans une mémoire d'un système informatique, comprenant des portions de code logiciel pour l'exécution du procédé selon la revendication 1 lorsque ledit programme est exécuté par le système informatique. selon la revendication 3.

6. Support lisible par un support informatique ayant des instructions exécutables par ordinateur adaptées pour provoquer l'exécution par le système informatique selon la revendication 3 du procédé de la revendication 1.


**Patentansprüche**

1. Verfahren zur Steuerung des elektromagnetischen Drehmoments einer Drehstrom-Synchronmaschine mit Permanentmagneten eines ein Kraftfahrzeug bestückenden Antriebsstrangs, das enthält:

- eine Messung (110) der an den drei Phasen der Maschine gelieferten Ströme ($I_1$, $I_2$, $I_3$),
- eine Umsetzung (120) der drei gemessenen Ströme in eine direkte ($I_d$) und eine quadratische Stromkomponente ($I_q$) ausgehend von einer Transformation der Drehstromsysteme,
- den Empfang (130) eines Sollwerts ($I_{q\_req}$) für die quadratische Stromkomponente ($I_q$) und eines Sollwerts ($I_{d\_req}$) für die direkte Stromkomponente ($I_d$), die von einem Kennfeld der optimalen direkten Stromkomponente für die Herstellung des elektromagnetischen Drehmoments im ganzen gewünschten Bereich stammt,
- eine Berechnung (160) der direkten und quadratischen Komponenten der nicht gesättigten Steuerspannung ($V_{d\_nonsat}$, $V_{q\_nonsat}$) ausgehend von den direkten und quadratischen Stromkomponenten ($I_d$, $I_q$) und den direkten und quadratischen Stromsollwerten ($I_{d\_req}$, $I_{q\_req}$),
- eine Berechnung (170) der direkten und quadratischen Komponenten der gesättigten Steuerspannung ($V_{d\_sat}$, $V_{q\_sat}$) ausgehend von der quadratischen Stromkomponente ($I_q$) und dem quadratischen Stromsollwert ($I_{q\_req}$),
- eine Steuerung (190, 200) der Ausgangsspannungen ($V_1$, $V_2$, $V_3$) eines am Eingang der Synchronmaschine gekoppelten Wechselrichters ausgehend von den nicht gesättigten Steuerungen, wenn die direkte Komponente des Stroms ($I_d$) positiv ist, oder ausgehend von den gesättigten Steuerungen, wenn die direkte Komponente des Stroms ($I_d$) negativ ist,

wobei das Verfahren **dadurch gekennzeichnet ist, dass** es außerdem vor den Berechnungen der gesättigten und nicht gesättigten Steuerspannungen eine Korrektur (150) des Sollwerts ($I_{q\_req}$) der quadratischen Stromkomponente abhängig von den Werten der direkten und quadratischen Komponenten ($I_d$, $I_q$) des in der Maschine fließenden Stroms und den Werten der direkten ($L_d$) und quadratischen Komponenten ($L_q$) der Induktivität der Synchronmaschine aufweist, wobei die Korrektur (150) die vorhergehende Herstellung eines Kennfelds der quadratischen Stromkomponente ($I_q$) enthält, die alleine das gewünschte Drehmoment herstellt ($L_{qseul}$), wobei der Sollwert der quadratischen Stromkomponente mit Hilfe der folgenden Gleichung korrigiert wird:

$$I_{qreq} = I_{qseul} - \frac{I_d I_q (L_d - L_q)}{\Phi_f}$$

mit $\Phi_t$ dem von den Magneten des Rotors erzeugten Fluss ausgedrückt in Weber (Wb),
$I_{qseul}$ der quadratischen Komponente des Statorstroms, die alleine das gewünschte Drehmoment in der Park-Ebene herstellt,
$I_d$ der direkten Komponente des Statorstroms in der Park-Ebene, berechnet ausgehend von den gemessenen Statorströmen,

$I_q$ der quadratischen Komponente des Statorstroms in der Park-Ebene, berechnet ausgehend von den gemessenen Statorströmen,
$L_d$ der direkten Komponente der Statorinduktivität in der Park-Ebene,
und $L_q$ der quadratischen Komponente der Statorinduktivität in der Park-Ebene.

2. Steuersystem des elektromagnetischen Drehmoments einer Maschine mit variabler geschalteter Reluktanz (1), das enthält:

- Messeinrichtungen (2) des an den drei Phasen (i) der Maschine (1) gelieferten Stroms ($I_1$, $I_2$, $I_3$), Umsetzungseinrichtungen (3), die die drei gemessenen Ströme in eine direkte ($I_d$) und eine quadratische Stromkomponente ($I_q$) ausgehend von einer Transformation der Drehstromsysteme umsetzen können,
- Empfangseinrichtungen (4) eines Sollwerts ($I_{q\_req}$) für die quadratische Stromkomponente ($I_q$) und eines Sollwerts ($I_{d\_req}$) für die direkte Stromkomponente ($I_d$),
- erste Recheneinrichtungen (8), die direkte und quadratische Komponenten der nicht gesättigten Steuerspannung ($V_{d\_nonsat}$, $V_{q\_nonsat}$) ausgehend von den direkten und quadratischen Stromkomponenten ($I_d$, $I_q$) und den direkten und quadratischen Stromsollwerten ($I_{d\_req}$, $I_{q\_req}$) berechnen können,
- zweite Recheneinrichtungen (9), die direkte und quadratische Komponenten der gesättigten Steuerspannung ($V_{d\_sat}$, $V_{q\_sat}$) ausgehend von der quadratischen Stromkomponente ($I_q$) und vom quadratischen Stromsollwert ($I_{q\_req}$) berechnen können,
- Steuereinrichtungen (11), die das Anlegen der Ausgangsspannungen ($V_1$, $V_2$, $V_3$) eines am Eingang der Synchronmaschine gekoppelten Wechselrichters (12) ausgehend von den nicht gesättigten Steuerungen, wenn die direkte Komponente des Stroms ($I_d$) positiv ist, oder ausgehend von gesättigten Steuerungen steuern können, wenn die direkte Komponente des Stroms ($I_d$) negativ ist,

wobei das System **dadurch gekennzeichnet ist, dass** es außerdem ein Korrekturmodul (6), das den Sollwert ($I_{q\_req}$) der quadratischen Stromkomponente abhängig von den Werten der direkten und quadratischen Komponenten ($I_d$, $I_q$) des in der Maschine fließenden Stroms und den Werten der direkten ($L_d$) und quadratischen Komponenten ($L_q$) der Induktivität der Maschine (1) korrigieren kann, und eine Verarbeitungseinheit (7) enthält, die am Eingang des Korrekturmoduls (6) gekoppelt ist und ein Kennfeld der optimalen ($I_{dopt}$) direkten Stromkomponente ($I_d$) zur Herstellung des elektromagnetischen Drehmoments über den ganzen gewünschten Bereich und ein Kennfeld der quadratischen Stromkomponente ($I_q$) enthält, die alleine das gewünschte Drehmoment herstellt ($I_{qseul}$).

3. EDV-System, das Einrichtungen enthält, die konfiguriert sind, das Verfahren nach einem der Ansprüche 1 bis 2 durchzuführen.

4. Kraftfahrzeug, das ein EDV-System nach Anspruch 3 enthält.

5. Computerprogrammprodukt, das direkt in einen Speicher eines EDV-Systems geladen werden kann, das Softwarecodeteile zur Ausführung des Verfahrens nach Anspruch 1 enthält, wenn das Programm vom EDV-System nach Anspruch 3 ausgeführt wird.

6. Träger, der von einem EDV-Träger gelesen werden kann, der von einem Computer ausführbare Anweisungen hat, die geeignet sind, die Ausführung durch das EDV-System gemäß Anspruch 3 des Verfahrens des Anspruchs 1 zu bewirken.

**Claims**

1. Method for controlling the electromagnetic torque of a three-phase permanent magnet synchronous machine of a powertrain equipping a motor vehicle, comprising:

- measuring (110) the current ($I_1$, $I_2$, $I_3$) delivered on the three phases of the machine,
- transposing (120) the three measured currents into a direct current component ($I_d$) and a quadratic current component ($I_q$) using a transform of the three-phase systems,
- receiving (130) a setpoint ($I_{q\_req}$) for the quadratic current component ($I_q$) and a setpoint ($I_{d\_req}$) for the direct current component ($I_d$) resulting from a mapping of the optimal direct current component for providing the electromagnetic torque over the entire desired range,
- calculating (160) the direct and quadratic components of the non-saturated control voltage ($V_{d\_nonsat}$, $V_{q\_nonsat}$)

from the direct and quadratic current components ($I_d$, $I_q$) and the direct and quadratic current setpoints ($I_{d\_req}$, $I_{q\_req}$),

- calculating (170) the direct and quadratic components of the saturated control voltage ($V_{d\_sat}$, $V_{q\_sat}$) from the quadratic current component ($I_q$) and the quadratic current setpoint ($I_{q\_req}$),
- controlling (190, 200) the output voltages ($V_1$, $V_2$, $V_3$) of an inverter coupled at the input of the synchronous machine using the non-saturated controls if the direct component of the current ($I_d$) is positive, or using the saturated controls if the direct component of the current ($I_d$) is negative,

said method being **characterized in that** it further comprises, before calculating the saturated and non-saturated control voltages, correcting (150) the setpoint ($I_{q\_req}$) of the quadratic current component in accordance with the values of the direct and quadratic components ($I_d$, $I_q$) of the current flowing in the machine and the values of the direct (Ld) and quadratic (Lq) components of the inductance of the synchronous machine, wherein the correcting (150) comprises the prior provision of a mapping of the quadratic current component ($I_q$) providing the desired torque ($I_{qseul}$) alone, the setpoint of the quadratic current component being corrected using the equation:

$$ I_{qreq} = I_{qseul} - \frac{I_d I_q \left( L_d - L_q \right)}{\Phi_f} $$

where $\phi f$ is the flux generated by the magnets of the rotor expressed in weber (Wb),
$I_{qseul}$ is the quadratic component of the stator current providing the desired torque alone in the Park plane,
$I_d$ is the direct component of the stator current in the Park plane, calculated from the measured stator currents,
$I_q$ is the quadratic component of the stator current in the Park plane, calculated from the measured stator currents,
$L_d$ is the direct component of the stator inductance in the Park plane,
and $L_q$ is the quadratic component of the stator inductance in the Park plane.

2. System for controlling the electromagnetic torque of a variable switched reluctance machine (1), comprising:

- means (2) for measuring the current ($I_1$, $I_2$, $I_3$) delivered on the three phases (i) of the machine (1),
- transposition means (3) able to transpose the three measured currents into a direct current component ($I_d$) and a quadratic current component ($I_q$) using a transform of the three-phase systems,
- means (4) for receiving a setpoint ($I_{q\_req}$) for the quadratic current component ($I_q$) and a setpoint ($I_{d\_req}$) for the direct current component ($I_d$),
- first calculation means (8) able to calculate direct and quadratic components of the non-saturated control voltage ($V_{d\_nonsat}$, $V_{q\_nonsat}$) from the direct and quadratic current components ($I_d$, $I_q$) and the direct and quadratic current setpoints ($I_{d\_req}$, $I_{q\_req}$),
- second calculation means (9) able to calculate direct and quadratic components of the saturated control voltage ($V_{d\_sat}$, $V_{q\_sat}$) from the quadratic current component ($I_q$) and the quadratic current setpoint ($I_{q\_req}$),
- control means (11) able to control the application of the output voltages ($V_1$, $V_2$, $V_3$) of an inverter (12) coupled at the input of the synchronous machine using the non-saturated controls if the direct component of the current ($I_d$) is positive, or using the saturated controls if the direct component of the current ($I_d$) is negative, said system being **characterized in that** it further comprises a correction module (6) able to correct the setpoint ($I_{q\_req}$) of the quadratic current component in accordance with the values of the direct and quadratic components ($I_d$, $I_q$) of the current flowing in the machine and the values of the direct (Ld) and quadratic (Lq) components of the inductance of the machine (1), and a processing unit (7) coupled at the input of the correction module (6) and comprising a mapping of the optimal direct current component ($I_d$) ($I_{dopt}$) for providing the electromagnetic torque over the entire desired range and a mapping of the quadratic current component ($I_q$) providing the desired torque ($I_{qseul}$) alone.

3. Computer system comprising means that are configured to implement the method according to either of Claims 1 and 2.

4. Motor vehicle comprising a computer system according to Claim 3.

5. Computer program product that can be loaded directly into a memory of a computer system, comprising portions of software code for executing the method according to Claim 1 when said program is executed by the computer system according to Claim 3.

6. Computer-readable medium having instructions that can be executed by a computer and that are adapted to cause the computer system according to Claim 3 to execute the method according to Claim 1.

## FIG.1

110 — Mesure des courants de la machine

120 — Transformée de Park

130 — Réception des consignes

140 — Détermination de $L_d$ et $L_q$

150 — Correction de la consigne $I_{qreq}$

160 — Calcul commandes non saturées

170 — Calcul commandes saturées

180 — $I_d < I_{dreq}$ ?

Non

Oui

200 — Commandes saturées

Commandes non saturées — 190

# FIG.2

EP 3 175 544 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3851234 A
- US 5015937 A
- US 6181091 B
- FR 2980059
- FR 2991525
- EP 0638457 A
- US 2013069568 A